# EUROPÄISCHE PATENTANMELDUNG

(11) **EP 4 198 850 A1**
(43) Veröffentlichungstag der Anmeldung: **21.06.2023**
(21) Anmeldenummer: 22207710.9
(22) Anmeldetag: 16.11.2022
(51) Int. Cl.: G06Q 10/04, G06Q 10/0631, E01C 23/12

(54) **VERFAHREN ZUR AUFWANDS-ABSCHÄTZUNG EINER GEPLANTEN FRÄSAUFGABE, DIE MIT EINER STRASSENFRÄSMASCHINE DURCHGEFÜHRT WIRD ODER DURCHGEFÜHRT WERDEN SOLL**

(30) Priorität: 15.12.2021 DE 102021133306
(71) Anmelder: Wirtgen GmbH, 53578 Windhagen (DE)
(72) Erfinder: BACH, Markus, 53129 Bonn (DE)
(74) Vertreter: Herrmann, Jochen

(57) **Zusammenfassung**

Die Erfindung betrifft ein Verfahren zur Aufwands-Abschätzung einer geplanten Fräsaufgabe, die mit einer Straßenfräsmaschine durchgeführt wird oder durchgeführt werden soll, wobei in eine Verarbeitungseinrichtung eines Planungssystems Aufgabedaten eingegeben werden, wobei die Aufgabedaten wenigstens einen Vorgabe-Maschinenparameter (80.3), wenigstens einen Materialparameter (80.1), und wenigstens einen Jobparameter (80.2) umfassen, Um einem Baustellenplaner die Planung einer oder mehrerer Baustellen zu erleichtern, ist es gemäß der Erfindung vorgesehen, dass die Verarbeitungseinrichtung aus den Aufgabedaten und unter Berücksichtigung eines Baustellenfaktors (60) und/oder eines Logistikfaktors (70) die Aufwands-Abschätzung ermittelt.

## Beschreibung

Die Erfindung betrifft ein Verfahren zur Aufwands-Abschätzung einer geplanten Fräsaufgabe, die mit einer Straßenfräsmaschine durchgeführt wird oder durchgeführt werden soll, wobei in eine Verarbeitungseinrichtung eines Planungssystems Aufgabedaten eingegeben werden, wobei die Aufgabedaten vorzugsweise wenigstens einen Vorgabe-Maschinenparameter, vorzugsweise wenigstens einen Materialparameter, und wenigstens einen Jobparameter umfassen, wobei der oder die Vorgabe-Maschinenparameter zumindest eine Angabe über die Herrichtung der Straßenfräsmaschine enthält, wobei der oder die Materialparameter zumindest eine Angabe umfasst, die das Material der zu bearbeitenden Bodenfläche charakterisiert, wobei der oder die Jobparameter zumindest eine Angabe bezüglich der geplanten Fräsarbeit oder der geplanten Fräsleistung enthält.

DE 10 20 15 111 249 A1 offenbart eine Straßenfräsmaschine, bei der Vorgabe-Maschinenparameter, Materialeigenschaften des zu fräsenden Untergrunds und Jobparameter eingegeben werden können. Unter Verwendung von Kennfeldern können aus diesen Vorgabewerten geeignete Soll-Maschinenparameter berechnet werden. Dem Maschinenführer können die Soll-Maschinenparameter angezeigt werden. Er kann dann entscheiden, ob er diese Soll-Maschinenparameter an der Straßenfräsmaschine einstellt. Alternativ können die Soll-Maschinenparameter automatisiert in eine Steuereinheit zur Steuerung der Straßenfräsmaschine übertragen werden. Es hat sich gezeigt, dass mit einem solchen Verfahren der Betrieb einer Straßenfräsmaschine optimiert und anwenderfreundlich gestaltet werden kann.

Es ist Aufgabe der Erfindung, ein Verfahren bereitzustellen, mit dem auf einfache Weise vorab der benötigte Bearbeitungsaufwand für einen geplanten Fräsauftrag erfasst werden kann.

Diese Aufgabe wird dadurch gelöst, dass die Verarbeitungseinrichtung aus den Aufgabedaten und unter Berücksichtigung eines Baustellenfaktors und/oder eines Logistikfaktors die Aufwands-Abschätzung ermittelt.

Erfindungsgemäß werden mithin zur Aufwands-Abschätzung "Randbedingungen" berücksichtigt, die sich aus der Baustelle selbst oder deren Umfeld ergeben. Diese "Randbedingungen" werden entweder als konkret die Baustelle betreffende/-n Baustellenfaktor/-en oder als Logistikfaktor/-en berücksichtigt.

Der Baustellenfaktor (bzw. die Baustellenfaktoren) ergeben sich aus Einflüssen, die die anstehende Fräsaufgabe auf der Baustelle einfacher oder komplizierter machen. Mit anderen Worten wird mit dem Baustellenfaktor die Komplexität einer Baustelle berücksichtigt.

Der Logistikfaktor (bzw. die Logistikfaktoren) berücksichtigt Einwirkungen, die sich aus den die anstehende Fräsaufgabe beeinflussenden Begleitprozessen ergeben. Mit anderen Worten kann der Logistikfaktor die sich aus der Organisation der Baustelle beeinflussenden Kenngrößen berücksichtigen.

Die Erfindung macht sich die Erkenntnis zunutze, dass die Komplexität der Baustelle und die Organisation der Baustelle Auswirkungen auf die Effizienz bzw. die Fräsleistung der Straßenfräsmaschine haben. Die Komplexität bzw. Organisation der Baustelle wirkt sich beispielsweise auf die zu fräsende Fläche oder das zu fräsende Volumen je Zeiteinheit, je Kraftstoffmenge und/oder je benötigte Menge an Betriebshilfsstoffen und somit letztlich auf die Dauer der Baustelle aus.

Mit der Berücksichtigung von Baustellen- und Logistikfaktoren wird einem Baustellenplaner eine verbesserte Angabe an die Hand gegeben, die ihm Aufschluss über den zu erwartenden Aufwand einer Baustelle gibt. Als den für eine Baustelle zu erwartenden Aufwand kann/können dem Benutzer, beispielsweise die benötigte Zeit, benötigte Betriebsstoffe, benötigte Betriebshilfsstoffe, zu erwartender Verschleiß- und/oder benötigte Verschleiß-/Ersatzteile (insbesondere Meißel), angegeben werden. Dabei haben Baustellenfaktoren und Logistikfaktoren einen Einfluss auf diese Angaben (benötigte Zeit, Betriebsstoffe, Betriebshilfsstoffe, Verschleiß- und Ersatzteile) je Flächeneinheit und werden erfindungsgemäß für eine bessere Aufwandsabschätzung berücksichtigt.

Grundsätzlich ist es also möglich den Aufwand einer Baustelle zunächst lediglich abhängig von Jobparametern, sowie vorzugsweise wenigstens einem Maschinenparameter und / oder vorzugsweise einem Materialparameter zu berechnen und diesen berechneten Aufwand dann aufgrund des Baustellenfaktors und / oder des Logistikfaktors zu korrigieren, um die Aufwands-Abschätzung zu erhalten. Alternativ können Baustellenfaktor und / oder Logistikfaktor direkt bei der Berechnung des Aufwandes berücksichtigt werden.

Er kann weiterhin beeinflussbare Baustellen- bzw. Logistikfaktoren verändern, um den ermittelten Aufwand wunschgemäß zu beeinflussen und zu verändern. Beispielsweise kann er einen oder mehrere Logistikfaktoren verändern, um eine Baustelle schneller fertig stellen zu können, als das mit einem Vorgabe-Setting möglich ist. Somit wird die Aufgabenplanung präziser und es kann für eine bessere Auslastung einer Straßenfräsmaschine gesorgt werden. Ist die Straßenfräsmaschine Teil eines Maschinenparks mit mehreren Straßenfräsmaschinen, so kann insgesamt die Auslastung des Maschinenparks verbessert werden.

Das erfindungsgemäße Verfahren zur Aufwands-Abschätzung einer geplanten Fräsaufgabe wird im Rahmen der Erfindung von einer Verarbeitungseinrichtung durchgeführt. Diese Verarbeitungseinrichtung kann eine oder mehrere Eingabeeinheiten aufweisen, in die vorzugsweise der wenigstens eine Vorgabe-Maschinenparameter, der wenigstens eine Materialparameter und/oder der wenigstens eine Jobparameter eingegeben werden kann. In einer Recheneinheit der Verarbeitungseinrichtung werden diese eingegebenen Aufgabedaten miteinander verrechnet. Die Verarbeitungseinrichtung ermittelt dabei einen oder mehrere Ausgabewerte, die die Aufwands-Abschätzung im Rahmen der Erfindung darstellt bzw. darstellen. Diese Ausgabewerte können einem Benutzer an einer Ausgabeeinheit angezeigt werden und/oder es können diese Ausgabewerte zumindest teilweise in die Steuereinrichtung der Straßenfräsmaschine geladen werden, um beispielsweise Einstellungen an der Straßenfräsmaschine vorzunehmen, die sich aus den Ausgabewerten ergeben. Die Ausgabewerte können an der Baumaschine selbst angezeigt werden, besonders vorteilhaft können die Ausgabewerte jedoch zur Baustellen- und Maschinenplanung beispielsweise in einem Planungsbüro oder bei einem Fräsdienstleister von einem Baustellenplaner zur Vorbereitung von Fräsarbeiten verwendet werden.

Grundsätzlich kann die Verarbeitungseinrichtung im Planungsbüro oder beim Fräsdienstleiter vorgesehen sein, um die Aufwands-Abschätzung durchzuführen.

Besonders vorteilhaft kann die Verarbeitungseinrichtung als zentrale Recheneinheit in Gestalt beispielsweise eines Servers ausgebildet sein und Zugriff für eine Vielzahl von Teilnehmern zur Durchführungen von Aufwandsabschätzungen für durchzuführende Baustellen ermöglichen.

Gemäß einer bevorzugten Erfindungsvariante kann es vorgesehen sein, dass die Aufwands-Abschätzung eine Angabe über die Dauer der geplanten Fräsaufgabe enthält. Mit anderen Worten erhält der Baustellenplaner eine Aussage darüber, wie lange eine geplante Fräsaufgabe dauert oder bis zu welchem Zeitpunkt eine Fräsaufgabe realistisch abgeschlossen werden kann. Dies ermöglicht es ihm verlässlich den Einsatz einer Straßenfräsmaschine oder mehrerer Straßenfräsmaschinen auf unterschiedlichen Baustellen zu planen.

Vorgabe-Maschinenparameter können im Rahmen der Erfindung Maschinenparameter sein, die während des Arbeitseinsatzes der Straßenfräsmaschine fest oder veränderlich eingestellt werden sollen. Nicht abschließend aufgezählt kann einer oder können mehrere Vorgabe-Maschinenparameter aus der folgenden Liste ausgewählt sein:
- geplante Frästiefe,
- Vorrat zumindest eines an/auf der Straßenfräsmaschine verfügbaren Betriebsstoffs. Dies berücksichtigt den oder die aktuell an der Straßenfräsmaschine verfügbaren Betriebsstoffe, beispielsweise die Menge des vorhandenen Kraftstoffs etc.
- Vorrat zumindest eines an/auf der Straßenfräsmaschine verfügbaren Betriebshilfsstoffs. Dies berücksichtigt den oder die aktuell an der Straßenfräsmaschine verfügbaren Betriebshilfsstoffe, beispielsweise Motoröl, Motorkühlmittel sowie die Menge an verfügbarem Kühlwasser zur Kühlung der Fräswalze während des Betriebseinsatzes oder
- den Verschleißzustand der aktuell an der Straßenfräsmaschine vorhandenen direkt oder indirekt am Fräsprozess beteiligten Werkzeuge. Direkt am Fräsprozess beteiligte Werkzeuge sind beispielsweise Bodenbearbeitungswerkzeuge. Entsprechend kann der Verschleißzustand der Straßenfräsmeißel, Meißelhalter oder Auswerfer berücksichtigt werden, die an der Fräswalze verbaut sind. Indirekt am Fräsprozess beteiligte Werkzeuge sind beispielsweise Verschleißwerkzeuge, die nicht unmittelbar dem Verschleißangriff des abgetragenen Fräsguts ausgesetzt sind.
- geplante Vorschubgeschwindigkeit der Straßenfräsmaschine. Hierbei kann eine gleichmäßige Vorschubgeschwindigkeit oder auch eine variierende Vorschubgeschwindigkeit während des Arbeitseinsatzes berücksichtigt werden.
- geplante Drehzahl der Fräswalze der Straßenfräsmaschine. Hierbei kann eine gleichmäßige Drehzahl oder auch eine variierende Drehzahl während des Arbeitseinsatzes berücksichtigt werden.
- geplantes Antriebsdrehmoment, das auf die Fräswalze übertragen werden soll. Hierbei kann ein gleichmäßiges Antriebsdrehmoment oder auch variierende Antriebsdrehmomente während des Arbeitseinsatzes berücksichtigt werden.
- Arbeitsbreite der Fräswalze der Straßenfräsmaschine.
- Fräswalzentyp der Straßenfräsmaschine,
- und/oder Leistungskennwert der Straßenfräsmaschine, z. B. Leistungskennwerte eines die Fräswalze antreibenden Antriebsmotors,
- auf die Fräswalze übertragenes Antriebsdrehmoment.

Materialparameter können im Rahmen der Erfindung ein oder mehrere Materialparameter sein, die aus der folgenden (nicht abschließenden) Liste ausgewählt ist/sind:
- Materialtyp zumindest eines Bereichs der zu bearbeitenden Bodenfläche,
- Schichtaufbau,
- Zu fräsende Schicht (Deckschicht / Binderschicht / Tragschicht / mehrere Schichten),
- Härte zumindest eines Bereichs der zu bearbeitenden Bodenfläche,
- und/oder Abrasivität zumindest eines Bereichs der zu bearbeitenden Bodenfläche.

Jobparameter können im Rahmen der Erfindung Parameter sein, die sich unmittelbar aus der geplanten Arbeitsaufgabe ergeben. Insbesondere können das Parameter sein, die sich aus der zu fräsenden Fläche und/oder dem zu fräsendem Materialvolumen während des geplanten Arbeitseinsatzes der Fräswalze ergeben. Nicht abschließend aufgezählt, können im Sinne der Erfindung Jobparameter einer oder mehrere der aus der nachfolgenden (nicht abschließenden) Liste ausgewählten Parameter sein:
- geplante Veränderung an der zu bearbeitenden Bodenfläche,
- geplante Frässtrecke,
- geplante Fräsfläche,
- geplante Fräsmasse,
- geplantes Fräsvolumen,
- geplante Fräszeit,
- und/oder geplantes Arbeitsergebnis.

Im Rahmen der Erfindung kann es vorgesehen sein, dass der Baustellenfaktor eine Baustellen-Korrekturangabe darstellt oder beinhaltet, die die Komplexität der Baustelle berücksichtigt an der die geplante Fräsaufgabe durchgeführt wird.

Dabei kann es so sein, dass sich die Baustellen-Korrekturangabe aus Faktoren ergibt, die die geplante Fräsaufgabe auf einer Baustelle einfacher oder komplizierter machen.

Insbesondere kann es so sein, dass die Baustellen-Korrekturangaben als zumindest einen Faktor die Geometrie der zu fräsenden Fläche berücksichtigt.

Beispielsweise ist es so, dass eine einfache geometrische Fläche, beispielsweise ein geradliniger Teilabschnitt einer Autobahn einfacher und schneller zu fräsen ist, als eine geometrisch kompliziert geformte Fräsfläche. So wird für eine komplizierte Fräsfläche innerhalb beispielsweise einer Stadt mit mehreren Kreuzungen ein deutlich höherer Fräsaufwand erforderlich. Diese geometrische Komplexität der Baustelle kann bei der Baustellen-Korrekturangabe und mithin im Baustellenfaktor Berücksichtigung finden.

Weiterhin kann es so sein, dass die Baustellen-Korrekturangaben als zumindest einen Faktor auch Hindernisse auf oder im unmittelbaren Umfeld der Baustelle berücksichtigt. Dabei lassen sich insbesondere Brücken, Verkehrsschilder, zu umfräsende Kanaldeckel und dergleichen berücksichtigen.

Bei einem Hindernis in dem an die Baustelle angrenzenden Bereich kann es sich beispielsweise um eine seitliche Begrenzung der Fräsfläche, beispielsweise einen Bürgersteig, eine Hauswand oder dergleichen handeln, die die Bearbeitung der Fräsfläche komplizierter und damit aufwendiger machen. Auch solche Hindernisse können mithin bei der Baustellen-Korrekturangabe und mithin im Baustellenfaktor Berücksichtigung finden.

Bei der Beurteilung der Komplexität einer Baustelle können auch Änderungen am Fräsprofil der zu erzeugenden Fräsfläche als Faktor berücksichtigt werden. Beispielsweise wird es mitunter gefordert, dass die Frästiefe bei einer Fräsaufgabe variieren soll. Auch ist es denkbar, dass die Breite der zu fräsenden Fläche variiert.

Kann ein Abschnitt einer zu bearbeitenden Fräsfläche mit einer Fräswalze in einer Überfahrt bearbeitet werden, so ist dies deutlich einfacher, als wenn die Fräsfläche eine hohe Breite aufweist, bei der in mehreren Überfahrten die zu fräsende Fläche abgetragen werden muss.

Weiterhin ist es so, dass dann, wenn mehrere Überfahrten nötig sind um eine zu fräsende Fläche zu bearbeiten, der Baustellen-Korrekturfaktor Rangierfahrten berücksichtigen kann. Als Rangierfahrt kann im Rahmen der Erfindung eine Bewegung der Straßenfräsmaschine während des Bearbeitungseinsatzes angesehen werden, bei der kein Fräsbetrieb erfolgt. Beispielsweise kann dabei die Länge der Rangierstrecke und/oder die Anzahl der Rangierfahrten Berücksichtigung finden.

Denkbar ist es auch, dass während des Bearbeitungseinsatzes die Straßenfräsmaschine umgerüstet oder in ihren Einstellungen verändert oder angepasst werden muss. Durch solche Änderungen der Maschineneinstellungen entstehen Maschinen-Stillstandszeiten, in denen kein Fräsbetrieb erfolgt, oder es entstehen Phasen, in denen der Fräsbetrieb eingeschränkt ist. Insofern kann als ein weiterer Faktor gemäß einer Erfindungsvariante beim Baustellen-Korrekturfaktor auch die Häufigkeit und/oder die Dauer von Änderungen von solchen Maschineneinstellungen berücksichtigt werden.

Weiterhin ist es denkbar, dass die Fehlertoleranz bei der Arbeitsdurchführung berücksichtigt wird. Wenn während einer Fräsaufgabe Bereichsgrenzen der zu fräsenden Fläche mit hoher Genauigkeit zu bearbeiten sind, dann kann hier, abhängig von der Qualifikation des Maschinenführers, eine Änderung der Bearbeitungsgeschwindigkeit notwendig werden. Entsprechend kann bei einer geringen Fehlertoleranz die Komplexität der Baustelle größer sein. Dies kann im Baustellenfaktor berücksichtigt werden.

Erfindungsgemäß kann es mithin vorgesehen sein, dass der Baustellenfaktor zumindest eine Baustellenangabe, ausgewählt aus der folgenden Liste (nicht abschließend) berücksichtigt:
- Geometrie der zu fräsenden Fläche,
- Art und/oder Anzahl der auf oder neben der zu fräsenden Fläche vorhandenen Hindernisse,
- und/oder Art und/oder Anzahl der Änderungen an dem Fräsprofil,
- Anzahl der nötigen Rangierfahrten
- Strecke einer oder mehrerer Rangierfahrten.
- Häufigkeit der Änderung von zumindest eines Maschinenparameters
- Fehlertoleranz bei der Arbeitsdurchführung.

Erfindungsgemäß kann es vorgesehen sein, dass der Logistikfaktor zumindest eine Logistikangabe, ausgewählt aus der folgenden Liste (nicht abschließend) berücksichtigt:
- Angabe zum Transport des Fräsmaterials,
- Angabe zur Verladung des Fräsmaterials,
- und/oder Angabe zur Versorgung mit Verbrauchsmaterialien, insbesondere Betriebs-(hilfs-)stoffen, sowie Ersatz- und Verschleißteilen, die von der Straßenfräsmaschine auf der Baustelle benötigt werden.

Bei der oder den Angaben zum Transport des Fräsmaterials können eine oder mehrere der folgenden Angaben berücksichtigt werden (nicht abschließende Aufzählung):
- Angabe zum Ladevolumen der eingesetzten LKW mit denen das Ausbauvolumen abtransportiert wird.
- Angabe zur Anzahl der verfügbaren LKW. Stehen ausreichend Lkw zur Verfügung, so dass die Straßenfräsmaschine unterbrechungsfrei arbeiten kann, so führt dies zu einer effektiven Abarbeitung der Baustelle. Ist hingegen eine geringe Anzahl von Lkw vorhanden, so können Stillstandzeiten der Straßenfräsmaschine entstehen, die entsprechend zu einer längeren Bearbeitungsdauer führen.
- Angabe zur Umlaufzeit, insbesondere der Transportzeit, eines LKW. Aus der Umlaufzeit und gegebenenfalls der erforderlichen Beladungszeit (das ist die Dauer, während der der Lkw das Fräsgut von der Straßenfräsmaschine aufnimmt) kann auf die erforderliche Anzahl von LKWs rückgeschlossen werden. Entsprechend lässt sich mit dem Planungssystem dann die erforderliche Anzahl der benötigten LKWs ermitteln.
- Angaben zur Dauer eines LKW-Wechsels an der Straßenfräsmaschine. Wie dies vorstehend beschrieben wurde, kann die Anzahl der benötigten LKWs mit einem erfindungsgemäßen Planungssystem ermittelt werden. Dabei kann eine Standard-LKW-Wechsel-Dauer Berücksichtigung finden. Zur Verbesserung der Aussage ist es jedoch auch denkbar, dass in das Planungssystem eine absolute oder relative Angabe zur Dauer eines LKW-Wechsels eingegeben wird. Entsprechend kann eine Abweichung von dem vorerwähnten Standard berücksichtigt werden. Beispielsweise wenn die räumlichen Gegebenheiten für den LKW Wechsel einfacher oder kompliziert sind, kann dies in einem Faktor berücksichtigt werden.
- Angabe zur Transportstrecke eines LKW.
- Angabe zur Verkehrssituation auf der Transportstrecke der LKW. Die Verkehrssituation kann in erheblichem Umfang, beispielsweise auch in Verbindung mit der Transportstrecke, die Dauer des LKW-Wechsels beeinflussen. Beispielsweise ist es auch denkbar, dass über den Tag verteilt mehrere Zeitfenster berücksichtigt werden, in denen die Verkehrssituation variiert.
- Angabe zur Qualität des Logistik-Dienstleisters. Abhängig von der Qualität des Logistik-Dienstleisters kann beispielsweise die Dauer variieren, in der ein LKW-Wechsel durchgeführt wird.

Im Rahmen der Erfindung kann es vorgesehen sein, dass eine oder mehrere der vorstehend genannten Angaben zum Transport in der Datenbank der Verarbeitungseinrichtung hinterlegt sind. Die Angaben zum Transport können dem Benutzer beispielsweise in einer Liste angezeigt werden. Aus dieser Liste kann sich der Benutzer dann die von ihm gewünschten Angaben zum Transport auswählen, sodass sie in die Verarbeitungseinrichtung übernommen werden oder er kann sie selbst über eine Eingabeeinheit dann in die Verarbeitungseinrichtung eingeben.

Bei der oder den Angaben zur Verladung des Fräsmaterials können eine oder mehrere der folgenden Angaben berücksichtigt werden:
- Teilverladung des Fräsmaterials.
- Vollverladung des Fräsmaterials.
- Keine Verladung des Fräsmaterials.

Hierbei wird die Verladungsart berücksichtigt. Entsprechend wird berücksichtigt, ob das von der Straßenfräsmaschine gefräste Material vollständig auf LKWs verladen wird, oder ob dies nicht oder nur teilweise auf LKWs verladen wird. Bei der Teilverladung wird ein Teil des Fräsmaterials auf LKWs verladen. Der verbleibende Teil verbleibt vor Ort, beispielsweise auf der gefrästen Fläche. Erfolgt keine Verladung, so verbleibt das Fräsgut vollständig vor Ort.

Im Rahmen der Erfindung kann es vorgesehen sein, dass eine oder mehrere der vorstehend genannten Angaben zur Verladung des Fräsmaterials in der Datenbank der Verarbeitungseinrichtung hinterlegt sind. Die Angaben zur Verladung können dem Benutzer, beispielsweise in einer Liste, angezeigt werden. Aus dieser Liste kann sich der Benutzer dann die von ihm gewünschten Angaben zur Verladung auswählen, sodass sie in die Verarbeitungseinrichtung übernommen werden oder er kann sie selbst über eine Eingabeeinheit dann in die Verarbeitungseinrichtung eingeben.

Im Rahmen der Erfindung können bei dem Logistikfaktor auch Logistikangaben berücksichtigt werden, die die Versorgung der Straßenfräsmaschine vor Ort mit Verbrauchsmaterialien berücksichtigt. Verbrauchsmaterialien können beispielsweise Kraftstoff, Wasser und/oder Ersatzteile sein. Bei den Logistikangaben kann daher beispielsweise die Qualität der Versorgung der Straßenfräsmaschine mit Verbrauchsmaterialien berücksichtigt werden. Die Qualität der Versorgung der Straßenfräsmaschine mit Verbrauchsmaterialien kann die Dauer berücksichtigen, die erforderlich ist, um die einzelnen Verbrauchsmaterialien an den Ort der Baustelle zu verbringen. Weiterhin kann auch die Zugänglichkeit zu der Straßenfräsmaschine vor Ort berücksichtigt werden, um die Verbrauchsmaterialien an der Straßenfräsmaschine verfügbar zu machen.

Bei einem erfindungsgemäßen Verfahren kann es vorgesehen sein, dass der Baustellenfaktor und/oder der Logistikfaktor aus einem funktionalen Zusammenhang ermittelt wird, in dem ein oder mehrere Baustellenangaben berücksichtigt ist/sind.

Vorzugsweise ist es so, dass von dem Baustellenplaner die Baustellenangaben und/oder Logistikangaben über die Eingabeeinheit in die Verarbeitungseinrichtung eingegeben werden.

In der Verarbeitungseinrichtung kann der funktionale Zusammenhang hinterlegt sein. Mit diesem funktionalen Zusammenhang und den Baustellenangaben und/oder den Logistikangaben kann dann der Baustellenfaktor und/oder der Logistikfaktor in der Verarbeitungseinrichtung ermittelt werden.

Denkbar ist es auch, dass in der Verarbeitungseinrichtung eine Baustellenfaktor-Auswahlliste und/oder eine Logistikfaktor-Auswahlliste, beispielsweise in einer Datenbank, hinterlegt ist/sind. Diese Baustellenfaktor-Auswahlliste und/oder Logistikfaktor-Auswahlliste kann dem Benutzer angezeigt werden. Er kann sich dann den für ihn geeigneten Baustellenfaktor bzw. Logistikfaktor aus dieser Liste mittelbar oder unmittelbar bestimmen und diesen bestätigen oder ihn in die Verarbeitungseinrichtung eingeben. Dies erleichtert die Bedienbarkeit des Planungssystems.

Vorzugsweise ist es so, dass die Baustellenfaktor-Auswahlliste und/oder die Logistikfaktor-Auswahlliste gebildet ist aus einer Klasseneinteilung, in der Baustellentypen in Komplexitätsklassen eingeteilt sind, und dass den Komplexitätsklassen jeweils zumindest ein Komplexitätsfaktor zugeordnet ist. Dies ermöglicht eine schnelle und einfache Abschätzung des Baustellenfaktors/Logistikfaktors. So ist es möglich mit geringem Aufwand die Komplexität einer Baustelle durch einen Baustellenfaktor bei der Aufwands-Abschätzung zu berücksichtigen, ohne dass es notwendig ist die Rahmenbedingungen der Baustelle zu einem hohen Detailierungsgrad zu kennen. Die Aufgabe der Erfindung wird auch gelöst mit einem Verfahren zur Erzeugung eines Datenbestands, wobei eine Aufwands-Abschätzung für eine geplante Fräsaufgabe nach einem der Ansprüche 1 bis 15, durchgeführt wird, wobei die Fräsaufgabe mittels der Straßenfräsmaschine durchgeführt wird, wobei während der Durchführung der Fräsaufgabe Daten ausgewählt aus der folgenden Liste (nicht abschließenden) erfasst werden:
- zumindest ein eingestellter-Maschinenparameter,
- wenigstens ein tatsächlicher Materialparameter,
- und / oder wenigstens ein tatsächlicher Jobparameter,
wobei aus zumindest einem Teil dieser erfassten Daten der tatsächliche Arbeitsaufwand ermittelt wird, und wobei der tatsächliche Aufwand mit der Aufwands-Abschätzung verglichen und aus diesem Vergleich ein oder mehrere Korrekturfaktoren, insbesondere ein tatsächlicher Baustellenfaktor und/oder ein tatsächlicher Logistikfaktor, ermittelt wird/werden.

Erfindungsgemäß wird mithin eine Aufwandsabschätzung vorgenommen, wie dies oben erläutert wurde. Anschließend wird dann die geplante Fräsaufgabe durchgeführt. Während der Durchführung der Fräsaufgabe werden Daten gesammelt, insbesondere wenigstens ein eingestellter-Maschinenparameter, wenigstens ein tatsächlicher Materialparameter und wenigstens ein tatsächlicher Jobparameter. Aus einem Vergleich mit der Aufwandsabschätzung lassen sich dann für die Baustelle die tatsächlichen Baustellen- und Logistikfaktoren ermitteln. Ergibt sich eine Differenz zu der Annahme, so lassen sich die bei der Aufwands-Abschätzung getroffenen Aufgabedaten anpassen. Hierdurch kann fortlaufend die Verbesserung des Datenbestands und damit der Aufwands-Abschätzung erreicht werden.

Wie dies oben erwähnt wurde, kann der Baustellenfaktor und/oder der Logistikfaktor aus einer Auswahlliste ausgewählt sein, bei der bestimmte Baustellentypen in Komplexitätsklassen eingeteilt sind und wobei diesen Komplexitätsklassen Komplexitätsfaktoren zugeordnet sind.

Beispielsweise ist es so, dass eine Baustellenfaktor-Auswahlliste folgendes Aussehen aufweisen kann:

| | |
|---|---|
| Landstraße ohne Kreuzung | Baustellenfaktor 1,0 |
| Autobahn | Baustellenfaktor 0,8 |
| Parkplatz | Baustellenfaktor 0,6 |
| Innerstädtische Baustelle | Baustellenfaktor 1,3 |
| Aufwändige innerstädtische Baustelle | Baustellenfaktor 1,6 |

In ähnlicher Weise kann auch eine Logistikfaktor-Auswahlliste gestaltet sein.

Für die Aufwandsabschätzung wählt sich der Benutzer die passende Baustellenart aus und erhält dadurch den Baustellenfaktor/Logistikfaktor.

Nachdem die Baustelle erledigt und die Fräsaufgabe durchgeführt ist, wird aufgrund der tatsächlich während der Fräsaufgabe aufgenommenen Werte ermittelt, ob es eine Abweichung zu dem Baustellenfaktor/Logistikfaktor gemäß der Baustellenfaktor/Logistikfaktor-Auswahlliste gibt.

Im Rahmen der Erfindung können nun in einer Datenbank eine Vielzahl von aufgenommenen Fräsaufgaben gespeichert und in einer Recheneinheit mit den Vorgabewerten aus der Baustellenfaktor-Auswahlliste und der Logistikfaktor-Auswahlliste verglichen werden. Ergibt sich dabei, dass systematisch eine Abweichung vorliegt, so kann eine Korrektur des Baustellenfaktors bzw. des Logistikfaktors vorgenommen werden. Mit anderen Worten wird dadurch ein selbstlernendes System geschaffen, welches die Grundlage für eine verbesserte Aufwands-Abschätzung gemäß der Erfindung liefert.

Um ein solches erfindungsgemäßes Verfahren besonders effektiv zu gestalten, wobei in relativ kurzer Zeit möglichst genaue Baustellen- und/oder Logistikfaktoren für die Aufwands-Abschätzung ermittelt werden, kann es gemäß einer Erfindungsvariante vorgesehen sein, dass von einer Vielzahl von Straßenfräsmaschinen die während eines Fräsauftrags ermittelten an der Maschine eingestellten Maschinenparameter, Jobparameter, und/oder Materialparameter in der Datenbank eingespeichert werden.

Zur Ermittlung des zumindest einen Jobparameters können während des Fräsbetriebs die Frästiefe, die Fräsdauer (also die Dauer während der die Straßenfräsmaschine aktiv fräst), die Stillstandzeiten (also die Dauer während der der Motor läuft aber die Maschine steht), die Anzahl und Dauer der Rangierfahrten (also die Fahrten ohne Fräsbetrieb) und/oder die Positionsdaten (beispielsweise via GPS), vorzugsweise fortlaufend oder in Zeitintervallen ermittelt und vorzugsweise an die Verarbeitungseinrichtung/Datenbank gesendet werden.

Zur Ermittlung des zumindest einen tatsächlichen Materialparameters kann es beispielsweise vorgesehen sein, dass die Materialeigenschaften aus den Maschinenparametern der Straßenfräsmaschine abgeleitet werden. Vorzugsweise werden diese Daten fortlaufend oder in Zeitintervallen ermittelt und vorzugsweise an die Verarbeitungseinrichtung/Datenbank gesendet.

Zur Ermittlung des wenigstens einen eingestellten Maschinenparameters kann es vorgesehen sein, dass während des Fräsbetriebs der Vorschub, die Fräswalzen-Zustellung (Frästiefe), die tatsächliche Fräswalzen-Drehzahl, das tatsächliche Antriebsdrehmoment, die Arbeitsbreite der Fräswalze und/oder der Fräswalzentyp erfasst werden. Vorzugsweise werden diese Daten fortlaufend oder in Zeitintervallen ermittelt und vorzugsweise an die Datenbank gesendet.

Die Erfindung wird im Folgenden anhand von in den Zeichnungen dargestellten Ausführungsbeispielen näher erläutert. Es zeigen:
Figur 1 in schematischer Darstellung und in Seitenansicht eine Straßenfräsmaschine,
Figur 2 in schematischer Darstellung eine Anordnung zur erfindungsgemäßen Aufwands-Abschätzung mit einer Verarbeitungseinrichtung,
Figur 3 ein Blockdiagramm, welches einen möglichen Ablauf einer erfindungsgemäßen Aufwands-Abschätzung veranschaulicht, und
Figur 4A und 4B jeweils ein weiteres Blockschaltbild, zur Verdeutlichung der Erfindung.

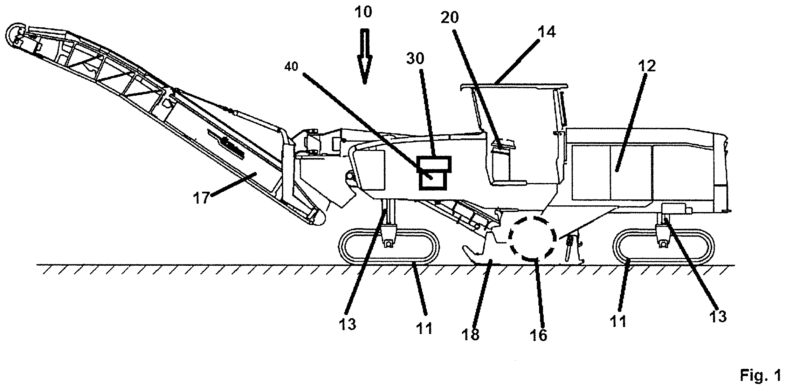

Fig. 1 zeigt in schematischer Darstellung und in Seitenansicht eine beispielhafte Straßenfräsmaschine 10. Ein Maschinenrahmen 12 ist über vier Hubsäulen 13 höhenverstellbar von Fahrwerken 11, beispielsweise Kettenlaufwerken, getragen. Die Bodenfräsmaschine 10 kann, ausgehend von einem Leitstand 14, über eine in dem Leitstand 14 angeordnete Steuerung 20 bedient werden. In einem Walzengehäuse 18 ist eine verdeckt angeordnete und in der Darstellung gestrichelt gezeichnete Fräswalze 16 zwischen den vorderen und den hinteren Fahrwerken 11 drehbar gelagert. Eine Fördereinrichtung 17 dient dem Abtransport des Fräsgutes.

Im Einsatz wird der Maschinenrahmen 12 mit einer über die Steuerung 20 eingegebene Vorschubgeschwindigkeit mittels der Fahrwerken 11 über den zu bearbeitenden Untergrund bewegt. Dabei tragen auf der sich drehenden Fräswalze 16 angeordnete Fräswerkzeuge, insbesondere Meißel, insbesondere Rundschaftmeißel, den Untergrund ab.

Die Höhenposition sowie die Drehzahl der Fräswalze 16 können von der Steuerung 20 aus eingestellt werden. Über die Höhenposition der Fräswalze 16 wird die Frästiefe eingestellt. Die Höhenposition der Fräswalze 16 kann dabei je nach Maschinentyp über die höhenverstellbaren Hubsäulen 13 oder andere geeignete Mittel erfolgen. Alternativ kann die Fräswalze 16 beispielsweise relativ zum Maschinenrahmen 12 in der Höhe verstellbar sein.

Die Straßenfräsmaschine 10 weist die Steuereinheit auf. Ein Teil dieser Steuereinheit kann eine Verarbeitungseinrichtung 40 sein, oder eine Verarbeitungseinrichtung 40 aufweisen. Die Verarbeitungseinrichtung 40 kann alternativ auch als separate Einheit bevorzugt an der Straßenfräsmaschine 10 vorgesehen sein.

Die Verarbeitungseinrichtung 40 kann im Rahmen der Erfindung auch eine weitere Verarbeitungseinrichtung aufweisen oder bilden.

Alternativ kann die Verarbeitungseinrichtung 40 und/oder die weitere Verarbeitungseinrichtung auch getrennt von der Straßenfräsmaschine 10 angeordnet sein. Die Verarbeitungseinrichtung kann als Einzelplatz-Rechner ausgebildet sein mit dem die Durchführung von Aufwandsabschätzungen für die Durchführung von Fräsaufgaben in der Vorbereitung von Baustellen ermöglicht wird.

Die Verarbeitungseinrichtung 40 kann insbesondere beispielsweise in einem Planungsbüro oder bei einem Fräsdienstleister angeordnet sein.

Besonders vorteilhaft kann die Verarbeitungseinrichtung 40 als zentrale Recheneinheit in Gestalt beispielsweise eines Servers ausgebildet sein und Zugriff für eine Vielzahl von Teilnehmern zur Durchführungen von Aufwandsabschätzungen für durchzuführende Baustellen ermöglichen. Ein solches System ist insbesondere vorteilhaft, wenn nach der Durchführung einer Fräsaufgabe die tatsächlichen Betriebsbedingungen und der tatsächliche Aufwand der Baustelle in das System zurückgespielt wird und damit ein, auf einer großen Datenbasis basierendes Prognosesystem zur Aufwandsabschätzung geschaffen werden kann.

Im Rahmen der Erfindung kann die Verarbeitungseinrichtung 40 auch drahtgebunden oder drahtlos über eine Funkverbindung mit der Steuereinrichtung der Straßenfräsmaschine 10 in Verbindung stehen. Dem Bediener der Straßenfräse kann dann der erwartete Arbeitsaufwand für eine bevorstehende Baustelle angezeigt werden.

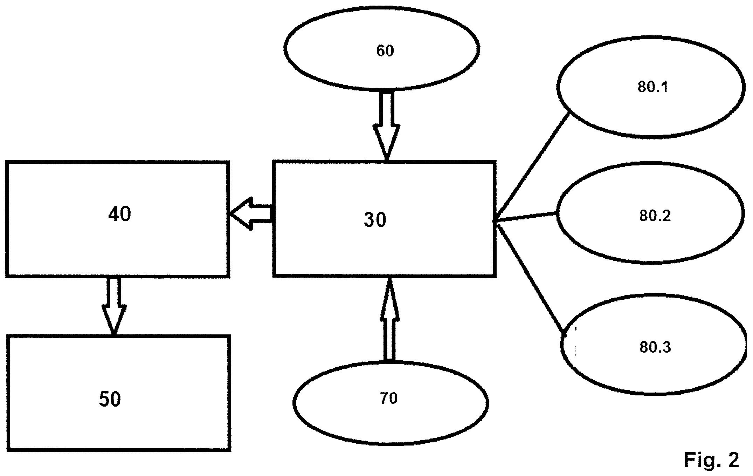

Figur 2 zeigt schematisch die Verarbeitungseinrichtung 40. Dieser Verarbeitungseinrichtung 40 ist eine Eingabeeinheit 30 zugeordnet oder kann mit dieser verbunden werden. Die Eingabeeinheit 30, die auch als Erfassungseinheit ausgebildet sein kann, dient dazu wenigstens einen Jobparameter 80.2, vorzugsweise mindestens einen Materialparameter 80.1 und vorzugsweise mindestens einen Vorgabe-Maschinenparameter 80.3 zu erfassen. Zusätzlich oder alternativ kann die Eingabeeinheit 30 dazu dienen, dass manuell wenigstens ein Jobparameter 80.2, vorzugsweise mindestens ein Materialparameter 80.1 und vorzugsweise mindestens ein Vorgabe-Maschinenparameter 80.3 eingegeben werden.

Der wenigstens eine Jobparameter 80.2, der vorzugsweise wenigstens eine Materialparameter 80.1 und / oder der vorzugsweise wenigstens eine Vorgabe-Maschinenparameter 80.3 können zur Aufwands-Abschätzung auch aus einem Planungssystem übernommen werden mit dem die Planung einer Baustelle erfolgt. In einem solchen System können beispielsweise Ort, Zeit und Rahmenbedingungen einer durchzuführenden Fräsaufgabe hinterlegt sein und für eine Aufwands-Abschätzung durch die Eingabeeinheit 30 abgerufen werden.

Die in die Eingabeeinheit 30 eingegebenen Werte stellen im Sinne der Erfindung Aufgabedaten dar. Diese werden an die Verarbeitungseinrichtung 40 übermittelt.

Wie Figur 2 weiter erkennen lässt, können in die Eingabeeinheit 30 auch zumindest ein Baustellenfaktor 60 und/oder zumindest ein Logistikfaktor 70 eingegeben werden. Auch der mindestens eine Baustellenfaktor 60 und/oder der zumindest eine Logistikfaktor 70 werden an die Verarbeitungseinrichtung 40 übertragen.

Die Verarbeitungseinrichtung 40 ermittelt aus den Aufgabedaten und unter Berücksichtigung des Baustellenfaktors 60 und/oder des Logistikfaktors 70 eine Aufwands-Abschätzung. Diese Aufwands-Abschätzung beinhaltet eine Aussage darüber, wie aufwendig die Bearbeitung einer geplanten Baustelle ist. Die Aufwands-Abschätzung kann an einer Anzeigevorrichtung 50, die an die Verarbeitungseinrichtungen 40 angeschlossen ist, angezeigt werden. Die Anzeigevorrichtung 50 kann auch eine sonstige Einheit darstellen, mit der einem Benutzer der Aufwand der anstehenden Baustelle visualisiert wird. Es können insbesondere auch mehrere Anzeigevorrichtungen vorhanden sein. Beispielsweise kann bei der Durchführung einer oben beschriebenen zentralen Planung einer Baustelle die Aufwands-Abschätzung dem Baustellenplaner unmittelbar und dem Bediener der Straßenfräsmaschine 10 vor oder während der Durchführung der Fräsaufgabe angezeigt werden.

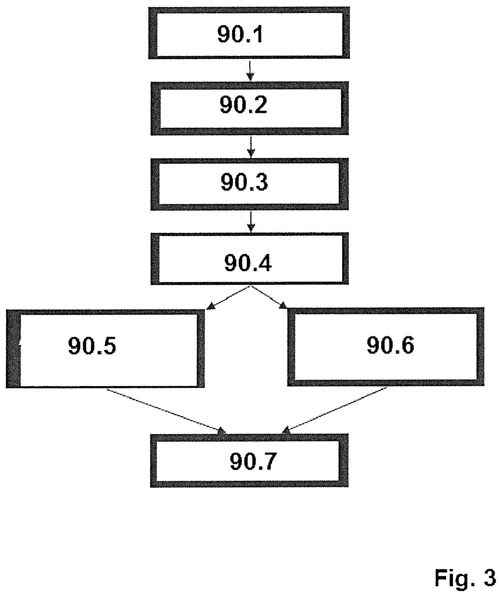

In Figur 3 ist ein Blockdiagramm gezeigt, das einen möglichen Ablauf eines erfindungsgemäßen Verfahrens zur Aufwands-Abschätzung zeigt. Wie diese Darstellung zeigt, kann über die Eingabeeinheit 30 zunächst ein Jobparameter 80.2 erfasst oder von einem Nutzer eingeben werden (Block 90.1). Zusätzlich kann über die Eingabeeinheit 30 ein Maschinenparameter (Block 90.2) und/oder einen Materialparameter 80.1 (Block 90.3) erfasst und / oder eingegeben werden.

Insbesondere Maschinen- und Materialparameter 80.1 können sich im Laufe einer Baustelle ändern. Wenn die Verarbeitungseinrichtung 40 an der Straßenfräsmaschine 10 angeordnet ist, oder die Straßenfräsmaschine 10 mit der Verarbeitungseinrichtung 40 verbunden ist, dann können diese Änderungen während der Durchführung der Fräsaufgabe erfasst werden. Handelt es sich hierbei um unerwartete Änderungen, die bei der ursprünglichen Aufwands-Abschätzung nicht berücksichtigt wurden, so kann die Aufwands-Abschätzung während der Durchführung des Fräsauftrages angepasst werden. Diese Änderungen können dem Maschinenbediener und/oder dem Baustellenplaner an der Anzeigeeinrichtung 50 werden.

Diese eingegebenen Aufgabedaten werden in die Verarbeitungseinrichtung 40 übertragen. In der Verarbeitungseinrichtung 40, die insbesondere eine Recheneinheit sein kann, wird eine vorläufige Aufwands-Abschätzung durchgeführt (Block 90.4), wobei aus den eingegebenen Daten der voraussichtlich zu erwartende Aufwand zur Bearbeitung einer Baustelle mit einer Straßenfräsmaschine 10 berechnet wird. Diese vorläufige Aufwands-Abschätzung kann dem Benutzer an einer Anzeigevorrichtung 50, wie dies oben erwähnt wurde, veranschaulicht werden.

Ist der Benutzer mit dem Ergebnis einverstanden, so ist der Vorgang abgeschlossen.

Möchte der Benutzer allerdings eine genauere Aufwands-Abschätzung erhalten, so hat er die Möglichkeit, erfindungsgemäß eine Korrektur der vorläufigen Aufwands-Abschätzung durch Eingabe eines Baustellenfaktors 60 (Block 90.5) und/oder eines Logistikfaktors 70 (Block 90.6) durchzuführen. Der Baustellenfaktor und/oder der Logistikfaktor 70 wird/werden, beispielsweise über die Eingabeeinheit 30, in der Verarbeitungseinrichtung 40 erfasst. Aus der vorläufigen Aufwands-Abschätzung wird dann in der Verarbeitungseinrichtung 40 eine erfindungsgemäße Aufwands-Abschätzung berechnet (Block 90.6). Diese kann dem Benutzer in der Anzeigevorrichtung 50 gezeigt werden.

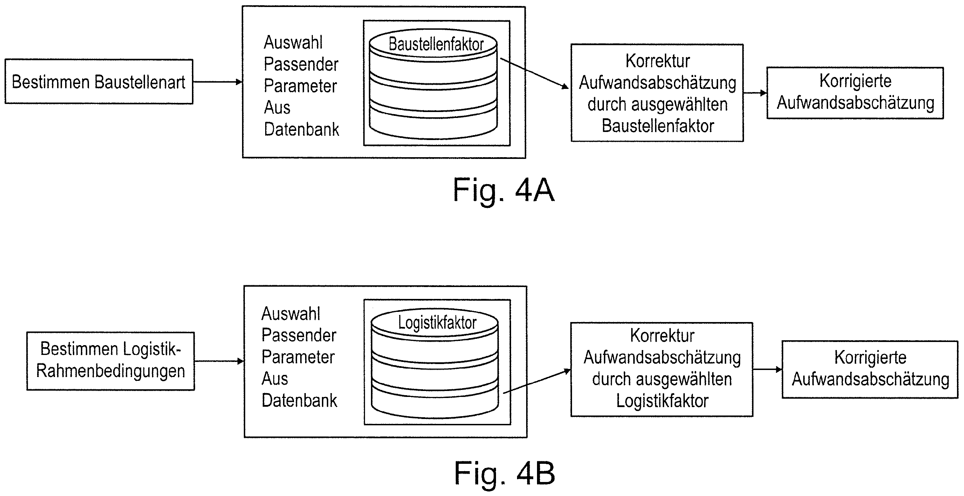

In den Blockschaltbildern gemäß Figur 4a und Figur 4b ist deutlicher veranschaulicht, wie die Korrektur der vorläufigen Aufwands-Abschätzung konkret durchgeführt werden kann, um die erfindungsgemäße Aufwands-Abschätzung zu erhalten.

Fig. 4a: beschreibt die Korrektur einer Aufwandsabschätzung mit einem Baustellenfaktor 60.

Fig. 4b: beschreibt die Korrektur einer Aufwandsabschätzung mit einem Logistikfaktor 70.

Wie Figur 4A zeigt, bestimmt ein Benutzer die Art der geplanten Baustelle.

Gemäß Figur 4B ermittelt der Benutzer die Logistik-Rahmenbedingungen, die sich in Zusammenhang mit der Abarbeitung der Baustelle ergeben werden.

Bei der Variante gemäß Figur 4A werden dem Benutzer an der oben erwähnten Anzeigevorrichtung 50 oder einer weiteren Anzeigevorrichtung Auswahllisten angezeigt. Insbesondere kann ihm eine Baustellenfaktor-Auswahlliste angezeigt werden, die in einer Datenbank hinterlegt ist. In dieser Datenbank können in der Baustellenfaktor-Auswahlliste Komplexitätsklassen abgespeichert sein, denen zumindest ein Komplexitätsfaktor zugeordnet ist. Der Benutzer hat dann die Möglichkeit, aus den ihm vorgeschlagenen Komplexitätsklassen die für die geplante Baustelle zutreffende Komplexitätsklasse auszuwählen. Nach der Auswahl wird über die Verarbeitungseinrichtung 40 der für die ausgewählte Komplexitätsklasse zugeordnete Komplexitätsfaktor aus der Datenbank abgefragt. Dieser Komplexitätsfaktor wird dann in der Verarbeitungseinrichtung verarbeitet, um die Korrektur der vorläufigen Aufwands-Abschätzung durchzuführen. Als Ergebnis erhält der Benutzer die korrigierte Aufwands-Abschätzung.

Bei der Variante gemäß Figur 4B werden dem Benutzer an der oben erwähnten Anzeigevorrichtung 50 oder einer weiteren Anzeigevorrichtung Auswahllisten angezeigt. Insbesondere kann ihm eine Logistikfaktor-Auswahlliste angezeigt werden, die in einer Datenbank hinterlegt ist. In dieser Datenbank können in der Logistikfaktor-Auswahlliste Komplexitätsklassen abgespeichert sein, denen zumindest ein Komplexitätsfaktor zugeordnet ist. Der Benutzer hat dann die Möglichkeit, aus den ihm vorgeschlagenen Komplexitätsklassen die für die geplante Baustelle zutreffende Komplexitätsklasse auszuwählen. Nach der Auswahl wird über die Verarbeitungseinrichtung 40 der für die ausgewählte Komplexitätsklasse zugeordnete Komplexitätsfaktor aus der Datenbank abgefragt. Dieser Komplexitätsfaktor wird dann in der Verarbeitungseinrichtung verarbeitet, um die Korrektur der vorläufigen Aufwands-Abschätzung durchzuführen. Als Ergebnis erhält der Benutzer die korrigierte Aufwands-Abschätzung.

Grundsätzlich kann die Aufwands-Abschätzung zunächst mit dem Baustellenfaktor 60 oder dem Logistikfaktor 70 korrigiert werden und auf Grundlage des daraus erhaltenen Ergebnis dann eine weitere Korrektur mittels des anderen Faktors aus Baustellenfaktor 60 und Logistikfaktor 70 durchgeführt werden um eine abschließende Aufwandsabschätzung zu erhalten.

## Patentansprüche

1. Verfahren zur Aufwands-Abschätzung einer geplanten Fräsaufgabe, die mit einer Straßenfräsmaschine (10) durchgeführt wird oder durchgeführt werden soll,
wobei in eine Verarbeitungseinrichtung (40) eines Planungssystems Aufgabedaten eingegeben werden, wobei die Aufgabedaten
- wenigstens einen Jobparameter (80.2),
- vorzugsweise wenigstens einen Vorgabe-Maschinenparameter (80.3),
- und vorzugsweise wenigstens einen Materialparameter (80.1) umfassen,
wobei der oder die Vorgabe-Maschinenparameter (80.3) zumindest eine Angabe über die Herrichtung der Straßenfräsmaschine enthält,
wobei der oder die Materialparameter (80.1) zumindest eine Angabe umfasst, die das Material der zu bearbeitenden Bodenfläche charakterisiert,
wobei der oder die Jobparameter (80.2) zumindest eine Angabe bezüglich der geplanten Fräsarbeit oder der geplanten Fräsleistung enthält,
**dadurch gekennzeichnet,**
**dass** die Verarbeitungseinrichtung (40) aus den Aufgabedaten und unter Berücksichtigung eines Baustellenfaktors (60) und/oder eines Logistikfaktors (70) die Aufwands-Abschätzung ermittelt.

2. Verfahren nach Anspruch 1, **dadurch gekennzeichnet, dass** die Aufwands-Abschätzung eine Angabe über die Dauer der geplanten Fräsaufgabe und / oder über die benötigten Betriebsstoffe und/oder über die benötigten Betriebshilfsstoffe enthält.

3. Verfahren nach Anspruch 1 oder 2, **dadurch gekennzeichnet, dass** ein oder mehrere Vorgabe-Maschinenparameter (80.3) aus der folgenden Liste ausgewählt ist/sind:
- geplante Frästiefe,
- Vorrat zumindest eines an/auf der Fräsmaschine verfügbarem Betriebsstoffs,
- Vorrat zumindest eines an/auf der Fräsmaschine verfügbarem Betriebshilfsstoffs,
- geplante Vorschubgeschwindigkeit der Straßenfräsmaschine,
- geplante Drehzahl der Fräswalze,
- geplantes Antriebsdrehmoment, das auf die Fräswalze übertragen werden soll,
- Arbeitsbreite der Fräswalze der Straßenfräsmaschine,
- Fräswalzentyp,
- und/ oder Leistungskennwert der Fräsmaschine.

4. Verfahren nach einem der Ansprüche 1 bis 3, **dadurch gekennzeichnet, dass** ein oder mehrere Materialparameter (80.1) aus der folgenden Liste ausgewählt ist/sind:
- Materialtyp zumindest eines Bereichs der zu bearbeitenden Bodenfläche,
- Schichtaufbau,
- Zu fräsende Schicht (Deckschicht / Binderschicht / Tragschicht / mehrere Schichten),
- Härte zumindest eines Bereichs der zu bearbeitenden Bodenfläche,
- und/oder Abrasivität zumindest eines Bereichs der zu bearbeitenden Bodenfläche.

5. Verfahren nach einem der Ansprüche 1 bis 4, **dadurch gekennzeichnet, dass** ein oder mehrere Jobparameter (80.2) aus der folgenden Liste ausgewählt ist/sind:
- geplante Veränderung an der zu bearbeitenden Bodenfläche,
- geplante Frässtrecke,
- geplante Fräsfläche,
- geplante Fräsmasse,
- geplantes Fräsvolumen,
- geplante Fräszeit,
- und/oder geplantes Arbeitsergebnis.

6. Verfahren nach einem der Ansprüche 1 bis 5, **dadurch gekennzeichnet, dass** der Baustellenfaktor 60 eine Baustellen-Korrekturangabe darstellt, die die Komplexität der Baustelle berücksichtigt auf der die geplante Fräsaufgabe durchgeführt wird.

7. Verfahren nach einem der Ansprüche 1 bis 6, **dadurch gekennzeichnet, dass** der Baustellenfaktor (60) zumindest eine Baustellenangabe, ausgewählt aus der folgenden Liste berücksichtigt:
- Geometrie der zu fräsenden Fläche,
- Art und/oder Anzahl der auf oder neben der zu fräsenden Fläche vorhandenen Hindernisse,
- und/oder Art und/oder Anzahl der Änderungen an dem Fräsprofil,
- Anzahl der nötigen Rangierfahrten
- Strecke einer oder mehrerer Rangierfahrten.
- Häufigkeit der Änderung von zumindest eines Maschinenparameters
- Fehlertoleranz bei der Arbeitsdurchführung.

8. Verfahren nach einem der Ansprüche 1 bis 7, **dadurch gekennzeichnet, dass** der Baustellenfaktor (60) aus einem funktionalen Zusammenhang ermittelt wird, in dem ein oder mehrere Baustellenangaben berücksichtigt ist/sind oder dass der Baustellenfaktor (60) aus einer Baustellenfaktor-Auswahlliste ermittelt wird.

9. Verfahren nach Anspruch 8, **dadurch gekennzeichnet, dass** die Baustellenfaktor-Auswahlliste aus einer Klasseneinteilung gebildet ist, in der Baustellentypen in Komplexitätsklassen eingeteilt sind, und dass den Komplexitätsklassen jeweils zumindest ein Komplexitätsfaktor zugeordnet ist.

10. Verfahren nach einem der Ansprüche 1 bis 9, **dadurch gekennzeichnet, dass** der Logistikfaktor (70) eine Logistik-Korrekturangabe darstellt, die die Organisation der Baustelle berücksichtigt, auf der die geplante Fräsaufgabe durchgeführt wird.

11. Verfahren nach einem der Ansprüche 1 bis 10, **dadurch gekennzeichnet, dass** der Logistikfaktor (70) zumindest eine Logistikangabe, ausgewählt aus der folgenden Liste berücksichtigt:
- Angabe zum Transport des Fräsmaterials,
- Angabe zur Verladung des Fräsmaterials,
- und/ oder Angabe zur Versorgung mit Verbrauchsmaterialien, die von der Straßenfräsmaschine auf der Baustelle benötigt werden.

12. Verfahren nach Anspruch 11, **dadurch gekennzeichnet, dass** die Angabe zum Transport des Fräsmaterials eine oder mehrere der folgenden Angaben berücksichtigt:
- Angabe zum Ladevolumen der eingesetzten LKW mit denen das Ausbauvolumen abtransportiert wird,
- Angabe zur Anzahl der verfügbaren LKW,
- Angabe zur Umlaufzeit, insbesondere der Transportzeit eines LKW,
- Angaben zur Dauer eines LKW-Wechsel an der Fräsmaschine
- Angabe zur Transportstrecke eines LKW,
- Angabe zur Verkehrssituation auf der Transportstrecke der LKW,
- und/oder Angabe zur Qualität eines Logistik-Dienstleisters.

13. Verfahren nach Anspruch 11 oder 12, **dadurch gekennzeichnet, dass** die Angabe zur Verladung des Fräsmaterials eine oder mehrere der folgenden Angaben berücksichtigt:
- Teilverladung des Fräsmaterials
- Vollverladung des Fräsmaterials
- Keine Verladung des Fräsmaterials.

14. Verfahren nach einem der Ansprüche 1 bis 13, **dadurch gekennzeichnet, dass** der Logistikfaktor (70) aus einem funktionalen Zusammenhang ermittelt wird, in dem ein oder mehrere Logistikangaben berücksichtigt ist/sind oder dass der Logistikfaktor (70) aus einer Logistikfaktor-Auswahlliste ermittelt wird.

15. Verfahren nach Anspruch 14, **dadurch gekennzeichnet, dass** die Logistikfaktor-Auswahlliste aus einer Klasseneinteilung gebildet ist, in der Baustellentypen in Komplexitätsklassen eingeteilt sind, und dass den Komplexitätsklassen jeweils zumindest ein Komplexitätsfaktor zugeordnet ist.

16. Verfahren zur Erzeugung eines Datenbestands, wobei eine Aufwands-Abschätzung für eine geplante Fräsaufgabe nach einem der Ansprüche 1 bis 15, durchgeführt wird, wobei die Fräsaufgabe mittels der Straßenfräsmaschine (10) durchgeführt wird, wobei während der Durchführung der Fräsaufgabe Daten aus gewählt aus der folgenden Liste erfasst werden:
- zumindest ein eingestellter-Maschinenparameter,
- wenigstens ein tatsächlicher Materialparameter (80.1),
- und /oder wenigstens ein tatsächlicher Jobparameter (80.2),
wobei aus zumindest einem Teil dieser erfassten Daten der tatsächliche Arbeitsaufwand ermittelt wird, und wobei der tatsächliche Aufwand mit der Aufwands-Abschätzung verglichen und aus diesem Vergleich ein oder mehrere Korrekturfaktoren, insbesondere ein tatsächlicher Baustellenfaktor 60 und/oder ein tatsächlicher Logistikfaktor (70) ermittelt wird/werden.
